(19) Europäisches Patentamt
European Patent Office
Office européen des brevets

(11) Veröffentlichungsnummer: **0 102 321**
**B1**

(12) # EUROPÄISCHE PATENTSCHRIFT

(45) Veröffentlichungstag der Patentschrift: **14.01.87**

(51) Int. Cl.⁴: **D 06 M 13/34**, C 08 L 71/02, C 07 D 251/46, C 08 K 5/00

(21) Anmeldenummer: **83810329.9**

(22) Anmeldetag: **20.07.83**

(54) **Stabilisatorsysteme für Spinnpräparationen.**

(30) Priorität: **26.07.82 US 401475**

(43) Veröffentlichungstag der Anmeldung: **07.03.84 Patentblatt 84/10**

(45) Bekanntmachung des Hinweises auf die Patenterteilung: **14.01.87 Patentblatt 87/3**

(84) Benannte Vertragsstaaten: **DE FR GB IT**

(56) Entgegenhaltungen:
**US-A-3 255 191**
**US-A-3 285 855**
**US-A-3 334 046**
**US-A-3 441 575**

(73) Patentinhaber: **CIBA- GEIGY AG, Klybeckstrasse 141, CH- 4002 Basel (CH)**

(72) Erfinder: **Reid, William J., Box 15, RR No. 4, New Fairfield, CT 06810 (US)**
Erfinder: **Capocci, Gerald A., 25 Greenway Drive, Greenwich, CT 06830 (US)**

**EP 0 102 321 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Ein Gleitmittel, das als Spinnpräparation verwendet werden soll, muss mehrere Funktionen erfüllen. Es soll das frisch hergestellte Filament vor Schmelzen oder Bruch schützen, indem es die Reibung zwischen dem Garn und Metallteilen wie z.B. Führungen, Rollen, geheizten Platten, Falschdrahtspindeln oder Friktionsscheiben herabsetzt. Das Gleitmittel sorgt für eine Garnkohäsion, hält somit das Fadenbündel zusammen und erlaubt daher am Ende des Verarbeitungsprozesses eine geeignete Aufwicklung des Garns. Auch führt es zum Abbau von statischer Elektrizität auf der Faser, die durch die rasche Bewegung bei der Verarbeitung entsteht.

Das Gleitmittel muss die Oberflächen von Maschinenteilen vor Abrieb schützen, und es muss zusätzlich thermisch stabil gegen Luft sein, da das Filament während der Prozessführung z.B. beim Heissverstrecken, Relaxieren, Fixieren oder Texturieren einer Hitzebehandlung ausgesetzt wird.

Diese unterschiedlichen Eigenschaften eines Gleitmittels sollten bis zu Temperaturen von 200°C erhalten bleiben. Von dort ab setzt entweder oxidativer Abbau oder Verdampfung ein oder beide Effekte treten kombiniert auf.

Herkömmliche Gleitmittel für synthetische thermoplastische Textilfasern haben generell den Nachteil, dass sie bei Temperaturen über 180°C zu qualmen beginnen und/oder teerige, harzige Massen bilden.

Diese Zersetzungsprodukte werden bevorzugt an geheizten Metallteilen abgelagert, welche sich prozessbedingt in Kontakt mit dem Filament befinden. Die Resistenz gegen oxidativen Abbau des Gleitmittels ist oft dort gefordert, wo die behandelten Filamenteüberlängere Zeit gelagert werdensollen. Unter solchen Bedingungen wird ein Garn,das mit einem Antioxidans wie z.B. 4,4-Thio-bis-(6-tert.butyl-3-methylphenol) behandelt wurde, sich verfärben.

Unterschiedliche Antioxidantien sind als Additive für Fasergleitmittel vorgeschlagen worden, um die erwähnten Schwierigkeiten zu überwinden.

Eine breite Anwendung als Thermostabilisator in industriellen Spinnpräparationen findet 4,4-Thio-bis-(6-tert.butyl-3-methylphenol), obwohl es nur wenig widerstandsfähig gegen Verfärbung durch Gas-Fading ist und daher nur dort verwendet wird, wo die Farbe keine Rolle spielt.

In der US-A- 3,397,081 wird eine Gleitmittelformulierung beschrieben, die aus dem Palmölester des Sorbit/Ethylenoxid-Kondensats und dem antioxydativ wirkenden Kondensationsprodukt von Diphenylamin und Aceton besteht. Andere antioxidierende Substanzen wie z.B. Chinoline, Anine oder sterisch gehinderte Phenole sind für dieses Gleitmittel als ungeeignet erkannt worden.

In der US-A- 3,505,220 wird die Verwendung von phenolischen Antioxidantien in Spinnpräparationen auf Mineralöl/Polybutenbasis beschrieben.

Und schliesslich legt die US-A- 4,217,228 Gleitmittelformulierungen offen, die Aryloxysiliconöle als Thermostabilisatoren enthalten.

Ein Gegenstand dieser Erfindung betrifft Stabilisatorsysteme gegen thermischen und oxidativen Abbau von unterschiedlichen Spinnpräparationen.

Einen weiteren Erfindungsgegenstand stellt die Kombination von individuellen Stabilisatorstubstanzen dar, die zu einer Erhöhung der antioxydativen Wirkungen führt.

Es wurde überraschenderweise gefunden, das die Kombination von 2,4-Bis-(n-octylthio)-6-(4-hydroxy-3,5-di-tert.butylanilino)-1,3,5-triazin mit einem sterisch gehinderten Phenol als Thermostabilisator oder als Antioxidans in der üblichen Menge in Spinnpräparationen auf der Basis von Polyoxyalkylenglykolen oder Fettsäureestern eingesetzt, eine deutlich verbesserte Stabilisatorwirkung zeigen. Diese Mischung schützt sowohl gegen oxidativen als auch gegen thermischen Abbau. Von besonderer Bedeutung dabei ist, dass die erfindungsgemässe Zusammensetzung auch auf demjenigen Gebiet eine deutliche Verbesserung zeigt, wo die bekannten Stabilisatoren bisher Schwächen zeigten, da sie die Flüchtigkeit der Spinnpräparation deutlich verringert.

Die erfindungsgemässen Systeme neigen zu geringerer Qualmbildung, Verfärbung und Viskositätsänderung, die insbesondere bei erhöhten Verarbeitungstemperaturen auftreten können. Insbesondere die verringerte Verfärbungstendenz ist von Interesse, wenn man beachtet, dass viele bekannte Stabilisatorsysteme darunter auch 4,4LThio-bis-(6-tert.butyl-3-methylphenol) infolge von Gas-Fading zur Bildung von Farbe neigen.

Die erfindungsgemässen Zusammensetzungen erweitern daher das Anwendungsgebiet für Spinnpräparationen. Wegen der verminderten Verdampfungsrate des Gleitmittels ist zusätzlich mit einer besseren Schmierwirkung der Spinnpräparation während des Verarbeitungsprozesses zu rechnen. Ebenfalls von Vorteil ist die gute Löslichkeit der erfindungsgemässen Gemische in den zur Verfügung stehenden Gleitmitteln, wodurch die Effektivität des Verarbeitungsprozesses und der Stabilisatorwirkung vergrössert wird.

Die neuen Mischungen führen also in mehrerer Hinsicht zu einer verbesserten Stabilisierung der Faser.

Die Herstellung und Verwendung als Antioxidans von 2,4-Bis-(n-octyl-thio)-6-(4-hydroxy-3,5-di-tert.butylanilino)-1,3,5-triazin in einer Reihe von Substraten wird in den US-A- 3,255,191 und 3,334,046 beschrieben.

Beispiele von sterisch gehinderten Phenolen werden durch die Formeln I, II oder III dargestellt

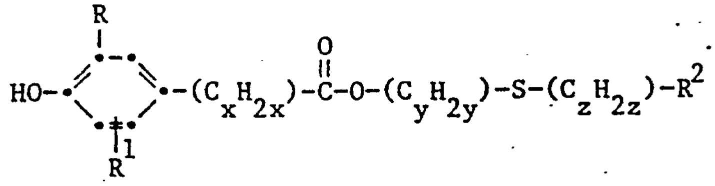

(I)

Hierbei bedeuten R und R unabhangig voneinander $C_1$-$C_6$-Alkyl, R Wasserstoff, Hydroxy oder ein Rest der Formel IV

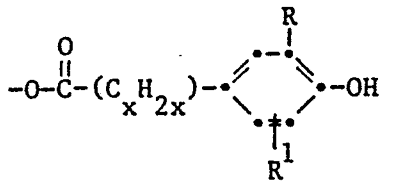

(IV) (V)

und x, y und z sind ganze Zahlen, wobei x die Werte von 0 bis 6 und y und z unabhängig voneinander die Werte zwischen 2 und 20 annehmen können.

Bevorzugt sind Verbindungen der Formel I, in denen R und R tert.Butylgruppen in o-Position zur Hydroxygruppe sind, x, y und z den Wert 2 annehmen und R durch einen Rest der Formel IV gekennzeichnet ist.

Besonders bevorzugt ist die Verbindung Thio-bis-[ethylen-3-(3,5-di-tert.butyl-4-hydroxyphenyl)-propionat], oder

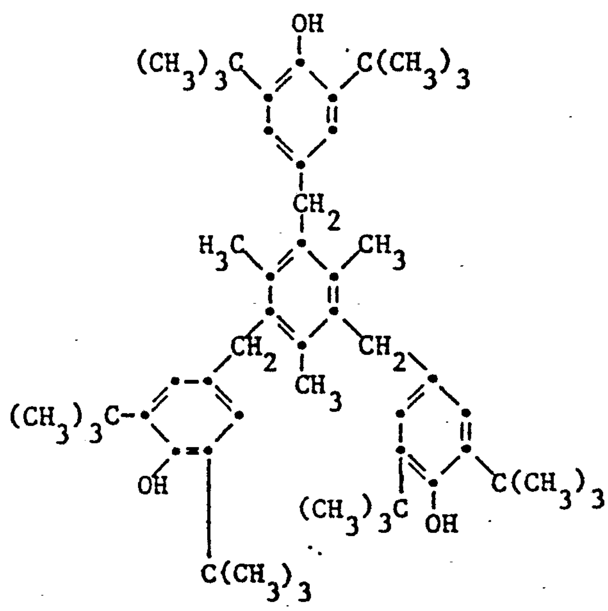

(II) ,

oder

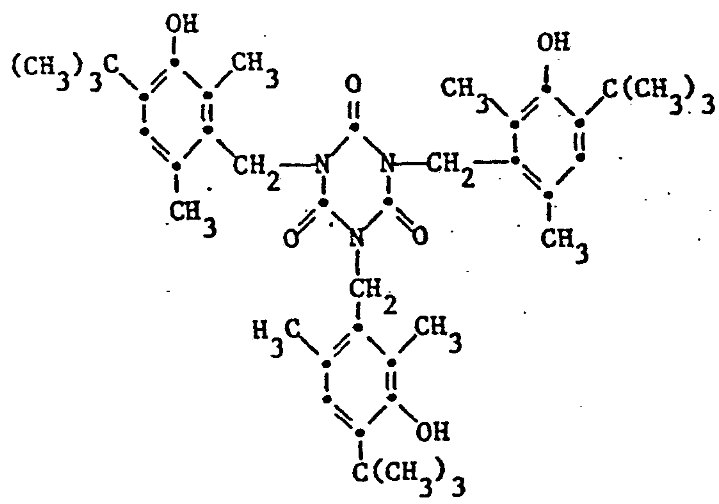

(III) (IV)

Sterisch gehinderte Phenole der Formel I, ihre Herstellung und ihre antioxydative Wirkung in einer Reihe von Substraten sind umfassend beschrieben in den US-A- 3,285,855 und 3,441,575.

Das Gleitmittel kann aus der Gruppe bestehend aus Polyoxyalkylen-Polyolether, Alkoxylaten von Fettsäuren oder Gemischen bestehend aus Alkoxylaten von Fettsäuren mit ungesättigten pflanzlichen Oelen ausgewählt werden.

So leiten sich z.B. Polyoxyalkylenglykole als Beispiele für PolyoxyalkylenPolyolether von Propylenoxid oder Ethylenoxid oder von Kopolymerisaten beider Substrate ab. Die Gruppe der Gleitmittel, die mit den erfindungsgemässen Gemischen verwendet werden können, umfasst jedes der bekannten alkoxylierten Schmierstoffe wie z.B. Polyethylenglykole, gemischte Polyethylen- und PolyPropylenglykole, Monoalkylester von gemischten Polyethylen- PolyproPylenglykolen, alkoxylierte Ester von Fettsäuren, Harzsäuren, Tallölsäuren, alkoxylierte Rizinusöle, alkoxylierte hydrierte Rizinusöle usw.

Besonders bevorzugt aus der Gruppe der ethoxylierten Gleitmittel sind ethoxylierte aliphatische Alkohole, ethoxylierte Alkylphenole, ethoxyliertes Dehydrosorbit, ethoxyliertes Sorbit, ethoxylierte Glyceride, ethoxylierte Pentaerithrite, ethoxylierte Fettsäuren, ethoxylierte Fettsäureamide, ethoxy-propoxylierte Fettsäureester, ethoxy-proPoxylierte Rizinusöle, ethoxy-propoxylierte hydrierte Rizinusöle, ethoxypropoxylierte aliphatische Alkohole, ethoxy-propoxylierte Alkylphenole, usw.

Die einzelnen Verbindungen sind umfassender beschrieben in: Kirk-Othmer Othmer, Encyclopedia of Chemical Technology, 2nd Edition.

Typische Substanzklassen der benutzten Gleitmittel lassen sich durch die Formeln V oder VI beschreiben

$$R^3-O(A)_mH \qquad \text{oder} \qquad R^3-\overset{O}{\overset{\|}{C}}-O(A)_mH$$

(VI) (V)         (VII) (VI)

worin $R^3$ eine geradkettige $C_8$-$C_{20}$-Alkylgruppe bedeutet und A eine Mischung von Oxyethylen und Oxypropylengruppen ist. $R^3$ als $C_8$-$C_{20}$-Alkyl kann beispielsweise n-Octyl, n-Decyl, n-Dodecyl, n-Tetradecyl, n-Hexadecyl, n-Octadecyl oder n-Eicosyl sein. Das Verhältnis von Oxypropylen zu Oxyethylen variiert von 0,1:1 bis zu 1,0:0,1; m ist eine ganze Zahl, die so ausgewählt wird, dass die Oxyalkylengruppen 50 bis 90 Gew.% der Verbindungen ausmachen.

Die Herstellung der Substanzen geschieht durch statistische oder geziehlte Addtion von Oxyalkylengruppen.

Einige dieser Substanzen sind umfassender in den US-A- 3,340,309 und 3,504,041 beschrieben. Weitere Verwendungsmöglichkeiten von Polyoxyalkylenglykolen sind in den US-A- 2,674,619 und 3,101,374 dargestellt.

Die Alkoxylate der Fettsäuren lassen sich durch die generelle Formel VII beschreiben

$$R^4-\overset{\displaystyle O}{\overset{\|}{C}}-(OC_aH_{2a})_b-OH \qquad (VIII)$$

Der Fettsäurerest wird durch $R^4$ dargestellt. Typische Beispiele sind Polyoxyethylenlaurat, -myristat, -palmitat, -stearat, -behenat und weitere.

Die Alkoxylate der Fettsäuren können auch mit bis zu 90 Gew.% durch ungesättigte pflanzliche Oele ersetzt werden. Beispiele für solche Substanzen sind Maiskeim-, Safflor-, Soja-, Sonnenblumen-, Leinsamen-, Palm-, Baumwolle-, Erdnussöle und andere.

Typische Spinnpräparationen enthaltend Polyoxyalkylenpolyolether sind im Handel erhältlich unter der Bezeichnung UCC 50 HB-260® (Union Carbide) oder unter der Hezeichnung PLURONIC L35® (BASF Wyandotte Corp.).

Eine Spinnpräparation, die Mischungen aus Fettsäureester und ungesättigten pflanzlichen Oelen enthält, ist von DuPont erhältlich.

Damit die vorteilhaften Eigenschaften der erfindungsgemässen Mischungen zu Geltung kommen, werden Triazin und sterisch gehindertes Phenol in den Gewichtsverhältnissen von 1:1 bis 1:9, bevorzugt von 1:1 bis 1:7 und besonders bevorzugt von 1:5 bis 1:7 verwendet.

Die Mischungen werden den Spinnpräparationen in Mengen von 0,1 bis 5 0 Gew.% zugesetzt, bevorzugt jedoch in den Mengen von etwa 0,5 bis 3,0 Gew.%.

Die auf diese Weise stabilisierte Spinnpräparation kann durch Zusammemmischen der Komponenten hergestellt werden. Um eine bessere Verteilung der Mischungspartner zu erreichen, kann eine mässige Erwärmung von Vorteil sein. Die Mischung kann gegebenenfalls noch weitere Additive enthalten, wie z.B. Antistatika, Bakterizide, Haftvermittler, Emulgatoren, Puffersubstanzen und andere mehr.

Die erfindungsgemäss stabilisierten Präparationen können bei der Verarbeitung einer grossen Anzahl natürlicher und synthetischer Fasern verwendet werden. So lassen sich u.a. Wolle, Baumwolle, Polyester, Polyamid, Polyolefin, Polyacrylat und andere mit den beschriebenen Präparationen behandeln.

Die Spinnpräparationen lassen sich in jedem konventionellen Streckzwirnverfahren oder in anderen bekannten Spinnprozessen zur Anwendung bringen.

Die Behandlung der synthetischen Fasern mit den Spinnpräparationen kann mit Hilfe aller bisher beschriebenen Verfahren durchgeführt werden, wie z.B. durch Eintauchen des Fadens, Aufbringen durch Rollen, Dochtschmierung, BesPrühen oder ähnliche Verfahren. Das Gleitmittel wird direkt oder als 30%ige (Gewicht) Emulsion auf die Faser gebracht.

Eine ausreichende Schmierung ist in der Regel gewährleistet, wenn die Faser etwa 0,05 bis 3,0 Gew.%, vorzugsweise jedoch 0,2 bis 1,0 Gew.% bezogen auf das Fasergewicht enthält. Der Temperaturbereich bei der Verarbeitung erstreckt sich von 150°C bis 320°C, liegt vorzugsweise oberhalb 200°C.

Der Temperaturbereich, in dem die erfindungsgemäss stabilisierten Gleitmittel ausreichende Schmierfähigkeit und Schutz gegen Oxidation gewährleisten, liegt zwischen 200°C und 230°C.

In den nachfolgenden Beispielen werden einige bevorzugte Ausführungsformen dieser Erfindung vorgestellt. Alle Mengenangaben beziehen sich auf das Gewicht, sofern nichts Abweichendes erwähnt wird.

**Beispiel 1**

Dieses Beispiel illustriert die effektive Stabilisatorwirkung der erfindungsgemässen Mischungen.

Mischungen von 2,4-Bis-(n-octylthio)-6-(4-hydroxy-3,5-tert.butyl-anilino)-1,3,5-triazin und Thio-bis-[ethylen-3-(3,5-di-tert.butyl-4-hydroxyphenyl)propionat] (in den nachfolgenden Tabellen als AO 1 bzw. AO 11 bezeichnet) werden in einer Konzentration von 2 Gew.% einer SPinnpräparation zugegeben, die aus einer Mischung von Pentaerithrittetraester und ungesättigtem Pflanzenöl besteht (DuPont).

Um die Eigenschaften der so erhaltenen Lösungen zu testen, werden folgende Untersuchungen durchgeführt:

Zur Ermittlung der Hochtemperaturflüchtigkeit der Spinnpräparation werden 0 2 g der Substanz in einem abgewogenen Tiegel hohen Temperaturen ausgesetzt, und die Probe (nach Abkühlen im Exsiccator) in periodischen Zeitabständen gewogen. Die Heizung erfolgt in einem vorgewärmten Heissluftofen.

Zur Bestimmung der Verfärbung durch Gas-Fading wird ein weisses Baumwolltuch mit 5 Tropfen der Spinnpräparation behandelt, anschliessend eine gewisse Zeit in einer Gasskamer bei 60°C belassen und zuletzt wird sein Yellowness-Index (gemäss ASTM D 1925-63T) gemessen.

Tabelle 1 enthält die Ergebnisse der Untersuchung der Hochtemperaturflüchtigkeit, Tabelle 11 enthält die Ergebnisse der Vergilbungsmessungen.

**Tabelle 1**

| Additiv | Gewichtsrückstand (%) nach Ofenalterung bei 230°C | | | |
|---|---|---|---|---|
| | 1 Std. | 2 Std. | 3 Std. | 4 Std. |
| – | 41.5 | 34.7 | 31.8 | 29.4 |
| AO I | 76.6 | 60.0 | 48.6 | 40.2 |
| AO II | 57.4 | 39.6 | 32.6 | 28.6 |
| AO II : AO I = 1:1 | 84.5 | 68.9 | 56.8 | 47.6 |
| AO II : AO I = 3:1 | 83.2 | 70.8 | 56.8 | 44.4 |
| AO II : AO I = 5:1 | 85.5 | 69.7 | 54.4 | 41.8 |
| AO II : AO I = 7:1 | 81.7 | 60.3 | 43.8 | 35.8 |

**Tabelle II**

Yellowness Index nach 50 Std. bei 60° C

| Additiv | – | AOI | AOII | AOII:AOI=1:1 | AOII:AOI=3:1 | AOII:AOI=5:1 | AOII:AOI=7:1 |
|---|---|---|---|---|---|---|---|
| YI | 5.5 | 6.0 | 20.5 | 17.5 | 27.0 | 27.5 | 28.3 |

**Beispiel 2**

Die Untersuchungen von Beispiel 1 werden wiederholt mit dem Unterschied, dass eine andere Spinnpräparation verwendet wird (Ethylenoxid-Propylenoxid-Kopolymer mit niedrigem Molekulargewicht, 50 HB-260® von Union Carbide). Tabelle III enthält die Untersuchungsergebnisse der Hochtemperaturflüchtigkeit und Tablle IV enthält die Ergebnisse der Vergilbungsmessungen.

**Tabelle III**

| Additiv | Gewichtsrückstand (%) nach Ofenalterung bei 230°C | | | |
|---|---|---|---|---|
| | 1 Std. | 2 Std. | 3 Std. | 4 Std. |
| - | 0.5 | - | - | - |
| AO I | 72.5 | 2.8 | 2.4 | 2.3 |
| AO II | 1.3 | 0.7 | 0.5 | 0.6 |
| AO II : AO I = 1:1 | 95.8 | 91.5 | 90.1 | 87.7 |
| AO II : AO I = 3:1 | 95.7 | 92.4 | 90.2 | 79.1 |
| AO II : AO I = 5:1 | 95.4 | 91.5 | 88.3 | 71.9 |

**Tabelle IV**

Yellowness Index nach 50 Std. bei 60° C

| Additiv | AOII:AOI = 1:1 | AOII:AOI = 3:1 | AOII:AOI = 5:1 | AOII:AOI = 7:1 |
|---|---|---|---|---|
| YI | 27.8 | 32.8 | 38:5 | 41.6 |

**Beispiel 3**

Die Untersuchungen von Beispiel 1 werden wiederholt, mit der Abweichung, dass verschiedene Stabilisatorsysteme getestet werden. Die Antioxidantien AOIII und AOIV entsprechen Verbindungen die durch die Formeln II und III dargestellt werden. Die Ergebnisse der Hochtemperaturflüchtigkeitsmessungen sind in Tabelle V dargestellt.

**Tabelle V**

| Additiv | Gewichtsrückstand (%) nach 1 Std. Ofenalterung bei 230°C |
|---|---|
| – | 39.8 |
| AOI | 87.2 |
| AOII | 71.4 |
| AOII:AOI = 5:1 | 81.0 |
| AOIII | 41.7 |
| AOIII:AOI = 5:1 | 56.0 |
| AOV | 60.1 |
| AOV:AOI = 5:1 | 75.4 |

Diese Daten illustrieren die Effektivität der vorliegenden erfindungsgemässen Gemische auch bei der Anwendung unterschiedlicher phenolischer Verbindungen.

**Patentansprüche**

1. Eine Spinnpräparation enthaltend
(A) ein Gleitmittel ausgewählt aus der Gruppe bestehend aus Polyoxyalkylenpolyolethern, Alkoxylaten von Fettsäuren oder Mischungen von Alkoxylaten der Fettsäuren mit ungesättigten pflanzlichen Oelen, und
(B) ein Stabilisatorsystem bestehend aus 2,4-Bis-(n-octylthio)-6-(4-hydroxy-3,5-di-tert.butylanilino)-1,3,5-triazin und einem sterisch gehinderten Phenol gemäss der Formel I, II, oder III

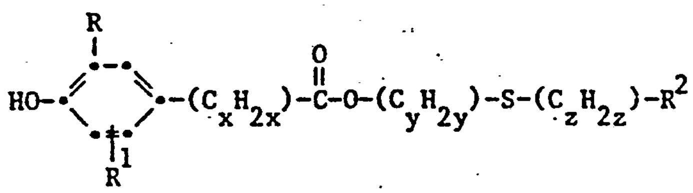

(I),

wobei R und $R^1$ unabhängig voneinander $C_1$-$C_6$-Alkyl, $R^2$ Wasserstoff, Hydroxy oder ein Rest der Formel IV bedeuten

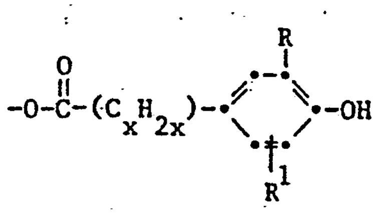

(IV),

und x, y und z ganze Zahlen sind, wobei- x die Werte von C bis 6 und y und z unabhängig voneinander die Werte zwischen 2 und 20 annehem können,

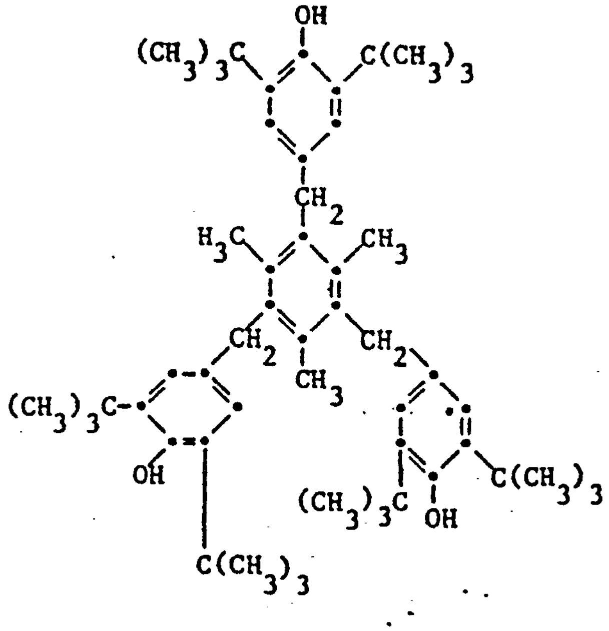

(II) ,

oder

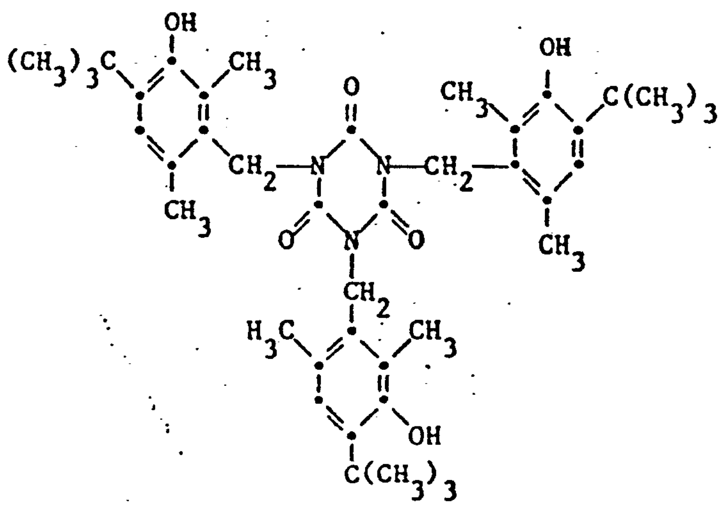

(IV)

2. Zusammensetzung gemäss Anspruch 1, wobei die sterisch gehinderte phenolische Komponente der Verbindung der Formel I entspricht.

3. Zusammensetzung gemäss Anspruch 1, wobei die sterisch gehinderte phenolische Komponente einer Verbindung der Formel II entspricht.

4. Zusammensetzung gemäss Anspruch 1, wobei die sterisch gehinderte phenolische Komponente einer Verbindung der Formel III entspricht.

5. Zusarmensetzung gemäss Anspruch 1, wobei die sterisch gehinderte phenolische Komponente Thio-bis-[ethylen-3-(3,5-di-tert.butyl-4-hydroxyphenyl)-propionat] ist.

6. Zusammensetzung gemäss Anspruch 1, wobei das Gleitmittel ein Polyoxyalkylenglykol ist, welches sich von Propylenoxid, Ethylenoxid oder Copolymeren davon ableitet.

7. Zusammensetzung gemäss Anspruch 1, wobei das Gleitmittel ein Alkoxylat einer $C_{12}$-$C_{22}$-Fettsäure ist.

8. Zusammensetzung gemäss Anspruch 7, wobei das Alkoxylat der Fettsäure mit einem ungesättigten pflanzlichen Oel gemischt ist.

9. Zusammensetzung gemäss Anspruch 1, wobei das Mischungsverhältnis von Triazin und phenolischer

KomPonente zwischen 1:1 und 1:9 variiert.

10. Zusammensetzung gemäss Anspruch 1, wobei das Mischungsverhältnis von Triazin und phenolischer KomPonente zwischen 1:5 und 1:7 variiert.

11. Natürliche oder synthetische Filamente, die mit einer Mischung gemäss Anspruch 1 beschichtet sind.

12. Verfahren zum Schmieren und zum Schutz von natürlichen und synthetischen Filamenten durch Anwendung von Spinnpräparationen gemäss Anspruch 1.

## Claims

1. A fiber-treating composition comprising

(A) a lubricant selected from the group consisting of Polyoxyalkylene ether polyols, alkoxylates of fatty acids, and alkoxylates of fatty acids blended with unsaturated vegetable oils, and

(B) a stabiliser system consisting of 2,4-bis(n-octylthio)-6-(4-hydroxy-3,5-di-tert.-butylanilino)-1,3,5-triazine and a sterically hindered phenol corresponding to the formula I, II or III

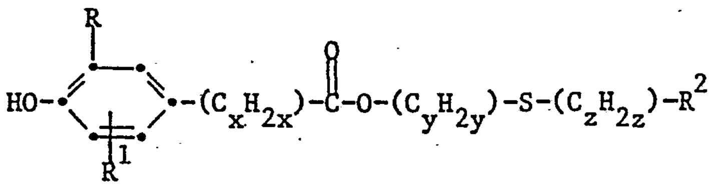

(I),

wherein R and R are each independently of the other $C_1$-$C_6$alkyl, $R^2$ is hydrogen, hydroxy or a radical of the formula IV

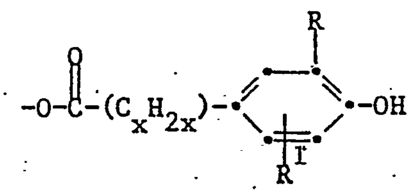

(IV)

and x, y and z are integers, x being from 0 to 6 and y and z each independently of the other being from 2 to 20,

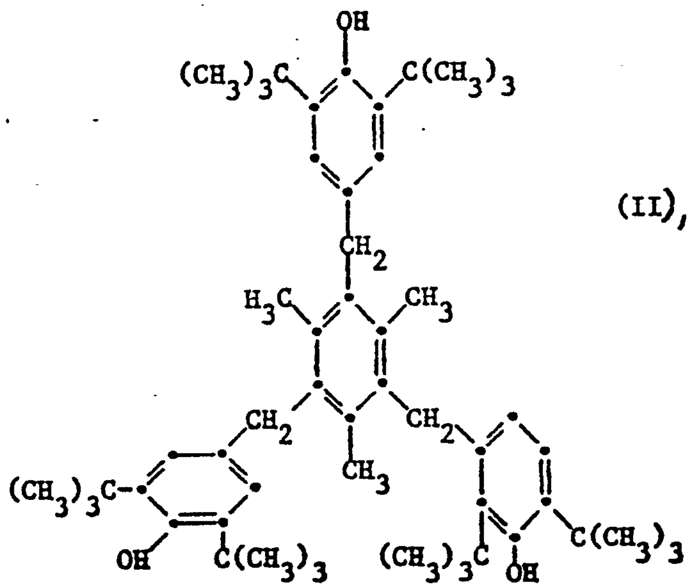

(II),

or

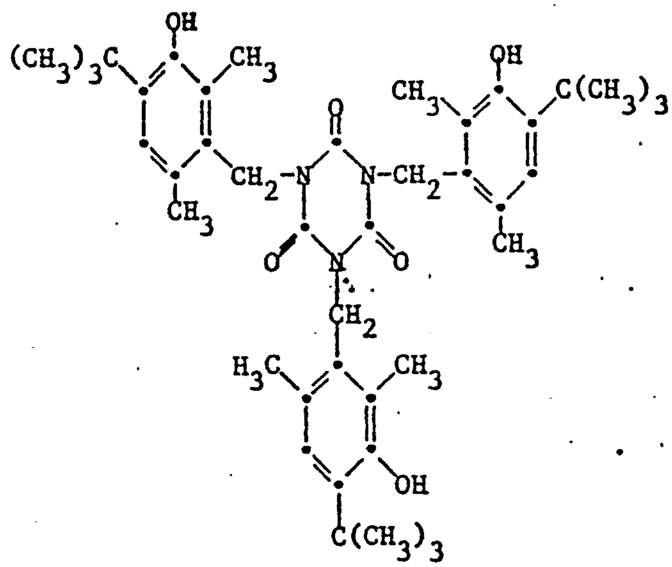

(III).

2. A composition according to claim 1, wherein the sterically hindered phenolic component corresponds to a compound of the formula I.

3. A composition according to claim 1, wherein the sterically hindered phenolic component corresponds to a compound of the formula II.

4. A composition according to claim 1, wherein the sterically hindered phenolic component corresponds to a compound of the formula 111.

5. A composition according to claim 1, wherein the sterically hindered phenolic component is thiobis[ethylene-3-(3,5-di-tert-butyl-4-hydroxyphenyl)propionate].

6. A composition according to claim 1, wherein the lubricant is a polyoxyalkylene glycol derived from propylene oxide or ethylene oxide or copolymers thereof.

7. A composition according to claim 1, wherein the lubricant is an alkoxylate of a $C_{12}$-$C_{22}$ fatty acid.

8. A composition according to claim 7, wherein the alkoxylate of a fatty acid is blended with an unsaturated vegetable oil.

9. A composition according to claim 1, wherein the ratio of triazine to phenolic component varies within the

range from 1:1 to 1:9.

10. A composition according to claim 1, wherein the ratio of triazine to phenolic component varies within the range from 1:5 to 1:7.

11. Natural or synthetic fibers having deposited thereon a composition according to claim 1.

12. A process for lubricating and protecting natural or synthetic fibers comprising applying to said fibers an effective amount of a fibre-treating composition according to claim 1.

## Revendications

1. Composition pour filage qui contient:

(A) un lubrifiant pris dans l'ensemble constitué par les éthers de poly-oxyalkylène-glycols, les produits d'alcoxylation d'acides gras ou les mélanges de produits d'alcoxylation d'acides gras avec des huiles végétales insaturées,

et

(B) un système stabilisant constitué de la bis-(n-octylthio)-2,4 (hydroxy-4 ditert-butyl-3,5 ani-lino)-6 triazine-1,3,5 et d'un phénol à empêchement stérique qui répond à la formule I:

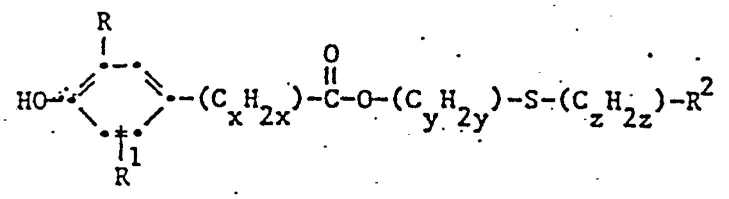

(I)

dans laquelle R et $R^1$ représentent chacun, indépendamment l'un de l'autre, un radical alkyle contenant de 1 à 6 atomes de carbone, $R^2$ représente l'hydrogène, un hydroxy ou un radical de formule IV:

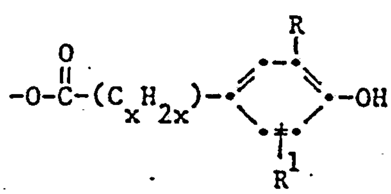

(IV)

et x, y et z représentent chacun un nombre entier, x désignant un nombre de 0 à 6 et y et z désignant chacun, indépendamment l'un de l'autre, un nombre de 2 à 2a,

ou qui répond à l'une des formules II et III suivantes:

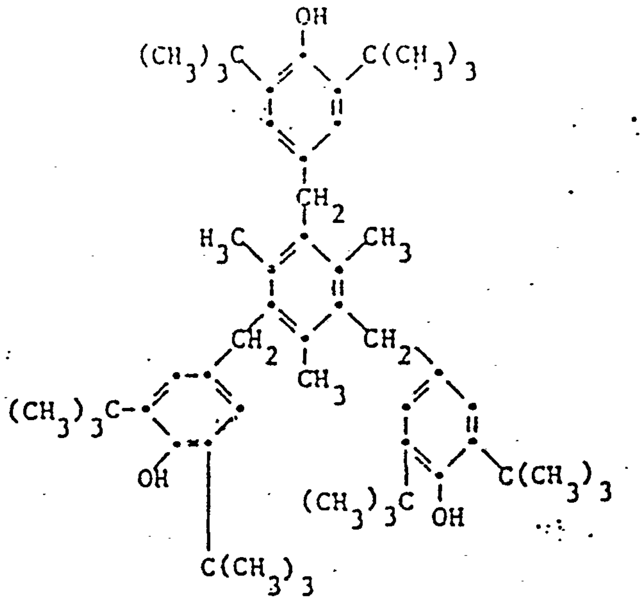

(II)

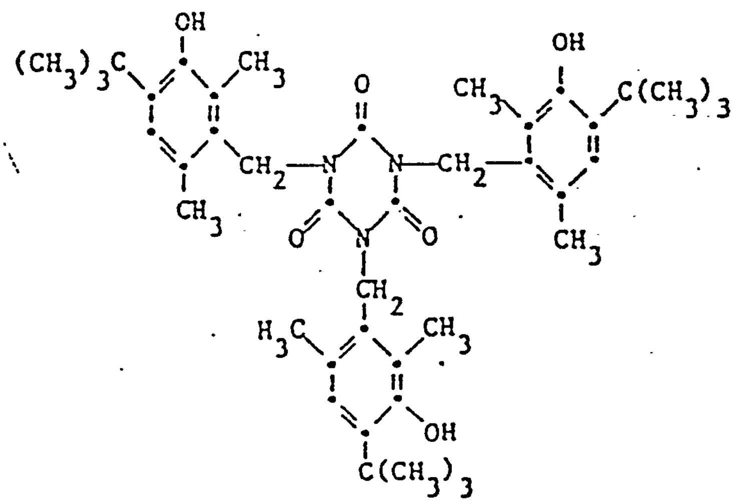

(III)

2. Composition selon la revendication 1 dans laquelle la campasante phénolique à empéchement stérique est un composé de formule I.

3. Composition selon la revendication 1 dans laquelle la composante phénolique à empêchement stérique et le composé de formule II.

4. Composition selon la revendication 1 dans laquelle la composante phénolique à empêchement stérique est le composé de formule III.

5. Composition selon la revendication 1 caractérisée en ce que la composante phénolique à empêchement stérique est le bis-[(ditert-butyl-3,5 hydroxy-4 phényl)-3 propionate] du thio-2,2' diéthanol.

6. Composition selon la revendication 1 dans laquelle le lubrifiant est un poly-oxyalkylène-glycol dérivant de l'oxyde de propylène, de l'oxyde d'éthyléne ou de copolymères de ceux-ci.

7. Composition selon la revendication 1 dans laquelle le lubrifiant est un produit d'alcoxylation d'un acide gras contenant de 12 à 22 atomes de carbone.

8. Composition selon la revendication 7 dans laquelle le produit d'alcoxylation d'acide gras est mélangé avec une huile végétale insaturée.

9. Composition selon la revendication 1 dans laquelle le rapport pondéral de la triazine à la composante

phénolique, dans le mélange, est compris entre 1:1 et 1:9.

10. Composition selon la revendication 1 dans laquelle le rapport pondéral de la triazine à la composante phénolique, dans le mélange, est compris entre 1:5 et 1:7.

11. Filaments naturels ou synthétiques qui sont enduits d'un mélange selon la revendication 1.

12. Procédé pour lubrifier et pour protéger des filaments naturels ou synthétiques, procédé selon lequel on utilise pour cela des compositions pour filage selon la revendication 1.